# EUROPEAN PATENT APPLICATION

(11) **EP 0 808 751 A1**
(43) Date of publication of application: **26.11.1997**
(21) Application number: 97108304.3
(22) Date of filing: 22.05.1997
(51) Int. Cl.: B60R 22/00

(54) **An accessory for grasping a safety belt**

(30) Priority: 22.05.1996 IT TO960440
(71) Applicant: CBV Italia S.a.s. di Viano Giuseppino & C., 10032 Brandizzo (Torino) (IT)
(72) Inventor: Viano, Giuseppino, 10032 Brandizzo (TO) (IT); Bonino, Romeo, 10088 Volpiano (TO) (IT); Caboni, Lucio, 10040 Druento (TO) (IT)
(74) Representative: Bosotti, Luciano

(57) **Abstract**

The accessory (1) is basically formed from an arm element which can be associated with the belt (B) so as to project forward from it and make it easier for the person occupying the seat (S) to reach the belt (B), even when the pillar (M) against which the belt (B) lies when not in use is located in a position significantly behind the seat (S).

## Description

The present invention concerns an accessory for grasping a safety belt. The invention has been developed with the aim of overcoming the problem which may arise in some vehicles, especially motor vehicles, in which when a safety belt is not in use and is in a position generally to the side and rear of an associated seat, it can be difficult for the person sitting in that seat to reach it.

A situation of this type can arise in many motor vehicles, especially in relation to the front seats if the person in question moves the seat forward depending on his anthropometric characteristics and/or his preference when driving or travelling, or where the design of the motor vehicle body is such (for example, a three-door vehicle whose side doors extend significantly from the front to the rear in order to enable access to the rear seats) that the pillar against which the seat belt lies when not in use is located quite far back in the passenger compartment.

To overcome this disadvantage to some extent it has been proposed, especially in relation to high specification motor vehicles and/or sports cars, to locate a rigid arm at the top of the pillar, which is pivotable about an approximately horizontal axis at the upper part of the pillar. This is in order to bring forward, that is, towards the seat and the person occupying it, at least a part of the free portion of the safety belt which, to this end, passes through a slot in the lower, free end of the arm.

However, this solution has some disadvantages in terms both of structure and use.

In the first place, it is a rather complex, and therefore expensive solution which can only be adopted as original equipment: the presence of the pivoting arm must clearly be provided for at the design stage of the vehicle and during the manufacture thereof.

In addition, by projecting forward from the central pillar of the passenger compartment, the arm, which is necessarily rigid, obstructs passenger access to the rear seats in three-door vehicles. For this reason, at least in some cases, the aforesaid arm is formed so that it can be selectively pulled downwards, against the pillar. As well as giving rise to further manufacturing problems, and therefore increased cost, this solution encounters the further inherent problem of the need to achieve a reasonable compromise between the requirement of applying a resilient biasing force to the arm to keep it projecting forward (so as to be able effectively to pass the safety belt to the person occupying the seat), and the need to avoid having to exert significant force to return the arm to the unused position against the pillar.

The object of the present invention is to provide an intrinsically simple solution which lacks the aforesaid disadvantages and which, in particular, can easily be adopted in motor vehicles already on the market (so-called "after market").

The solution according to the invention, having the characteristics referred to in the following claims, lends itself to use as original equipment, as well in relation to safety belts that have already been fitted.

In relation to this, the term "accessory", as used in the present description and the following claims, is to be understood as referring both to an element which can be mounted on a safety belt that has already been fitted in a motor vehicle, and to an element forming an integral part of a safety belt during the manufacture thereof when it is, in fact, inseparable from the belt itself.

The invention will now be described purely by way of non-limitative example, with reference to the accompanying drawings, in which:
- Figure 1 illustrates a first embodiment of an accessory according to the invention in its typical position for use in the passenger compartment of a motor vehicle;
- Figure 2 shows in more detail the first embodiment of the accessory according to the invention; and
- Figures 3 and 4 correspond substantially to Figures 1 and 2, and relate to a possible embodiment of the solution according to the invention.

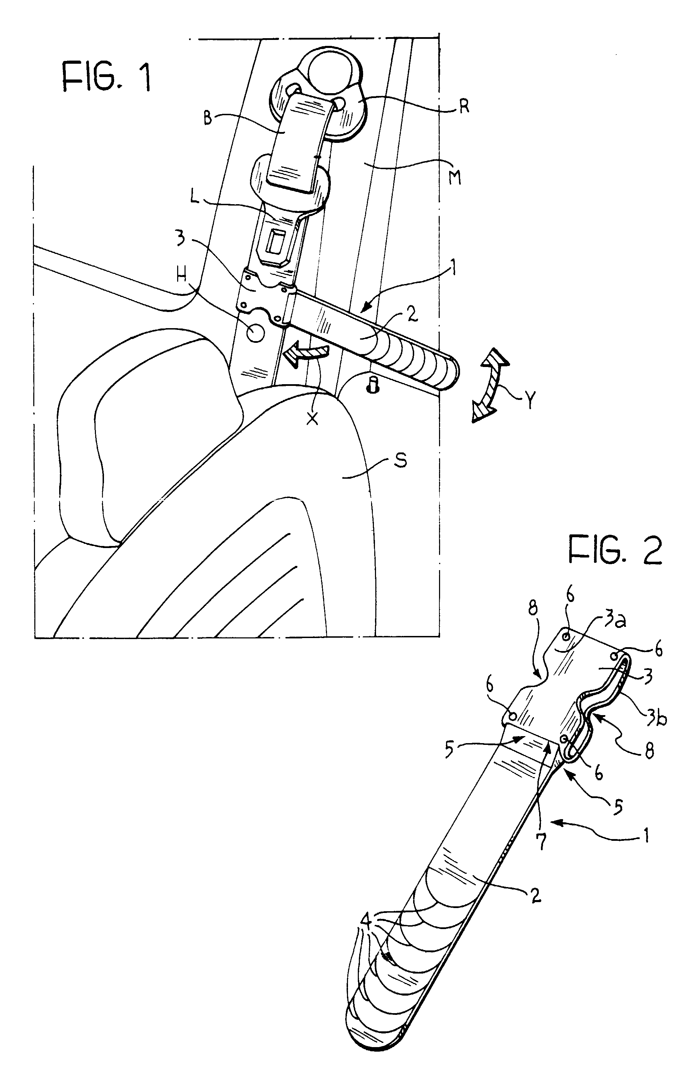

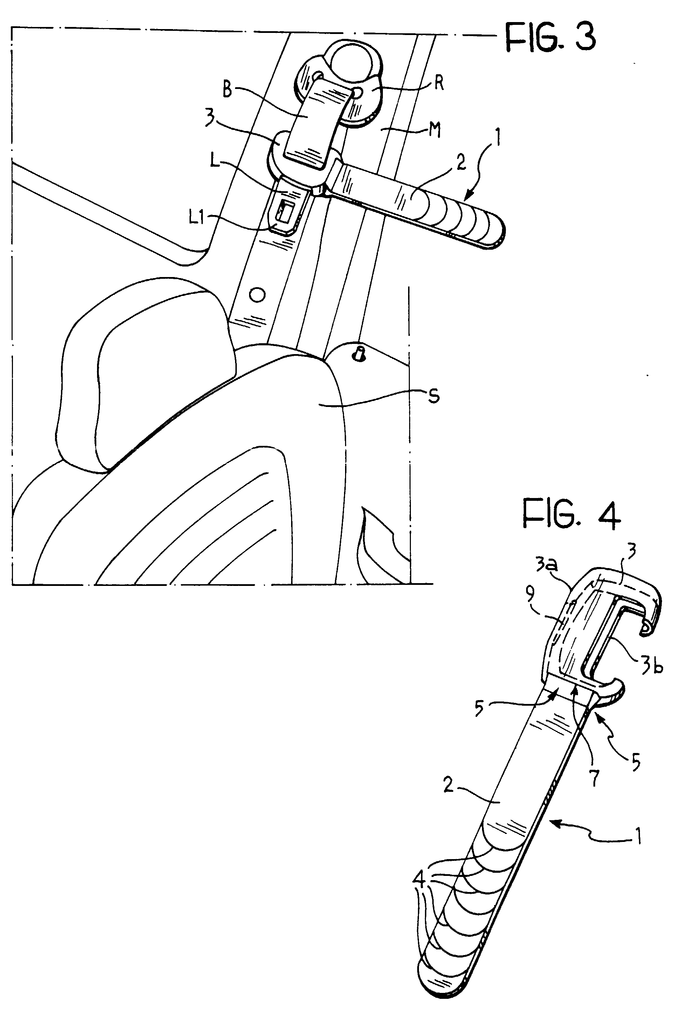

In Figures 1 and 3, the reference letter S indicates schematically a seat of a motor vehicle (for example, it may be the driver's seat of a motor vehicle) situated beside a pillar M (typically, the intermediate side pillar of the passenger compartment) of the motor vehicle itself.

According to a solution widely known in the art, a portion of a safety belt B lies against the pillar M when it is not in use. Specifically, this is the portion intended to be pulled across the stomach and inclined transversely across the chest of the body of the person in the seat S. This occurs by way of the insertion of an attachment element L, usually known as a "tongue", in a coupling element (not shown) located centrally in the passenger compartment, usually above the so-called transmission tunnel or at the side of the seat, after the belt B has been pulled across the body of the user.

All of the above is realised according to criteria widely known in the art which do not need to be described here as they are not in themselves relevant to the embodiment or to the comprehension of the invention. This also applies to the specific way in which the belt B is mounted. By way of example, Figures 1 and 3 refer to a situation in which the belt B, in order to be wound up inside the pillar, passes through a pivotable support loop element R fixed to the pillar M. As is well known, entirely different solutions are known, for example, in which the portion of the belt B unwinds from the interior of the pillar M, emerging therefrom through an opening, etc. The same is also true as regards the anchorage of the lower end of the belt B below the mounting position of the accessory according to the invention, generally indicated 1.

This lower end may, in fact, be anchored to the passenger compartment in a fixed position, or it may lead to an arch-like formation which enables it to move forward and backward with respect to the motor vehicle. These are, however, manufacturing details which are not relevant to understanding the invention: to this end it is, in fact, noted that it can freely be adapted, without particular difficulties, to the diverse manufacturing and mounting arrangements of safety belts B currently in use.

In basic terms, the accessory 1 according to the invention is shaped as a generally elongate gripper body which projects in the form of an arm from the belt B towards the seat S (that is, forwardly with reference to the embodiment shown in Figures 1 and 3).

By gripping this arm at its forward end, the person in seat S is thus able (indirectly) to grasp the belt B so as to be able to pull it forward. It is then possible to grip the belt and arrange it so that it passes across the body in the usual way without having to perform the uncomfortable movement of reaching backwards with one arm, usually together with a twisting movement of the body on the seat S.

By comparing Figures 1 and 3, it can easily be appreciated how this object is achieved when the accessory 1 is mounted or fitted directly on the belt B itself (Figure 1), or when the accessory 1 is fitted on the tongue L which is, in turn, mounted on the belt B (Figure 3). These two possible mounting arrangements fall within a clear common concept, that is, of envisaging the accessory 1 as an element "associated" (directly as in Figure 1, or indirectly as in Figure 3) with the belt B.

In both of the embodiments illustrated, the accessory 1 comprises two parts, that is a grip 2 or forward part in use (substantially identical in the two embodiments illustrated), and a connector or carrier 3 (which has, for obvious reasons, different characteristics in the embodiments of Figure 1 and Figure 3).

The grip 2 is preferably formed from a single piece of plastics/rubbery material (for example, soft PVC, possibly reinforced with filamentary structures) with an overall length, measured in the general horizontal direction of the accessory in the in-use condition, of between a minimum of approximately 3 cm and a maximum of approximately 30 cm. Naturally, these limits must not be considered definitive since it may, in some circumstances of use, be appropriate to have, for example, a longer length.

The surface of the grip 2 may be smooth, or provided at least in part with protuberances such as ribs or small studs, or grooves, to facilitate a good grip by the user. The presence of grooves, such as, for example, the semicircular grooves indicated 4 in Figures 2 and 4, also enable the user to shorten the grip 2, for example, by cutting or shearing, so as to adapt its length to the specific requirements or habits of use.

The grip 2 may be straight as shown in the accompanying drawings, or it may be inclined at an angle of up to a maximum of approximately 45° with respect to the horizontal axis referred to in Figures 1 to 4. In this case too, the value of 45°, indicated as the upper limit of the range of possible angles of inclination, should not be interpreted as a limitation on the invention.

The grip 2 may also be formed from several pieces joined together by interconnection systems, or it may have a telescopic structure enabling the user to adjust its length.

As regards the connection of the grip 2 to the coupling part 3, defined below for clarity as a "feeder", it is possible to envisage its manufacture as a single piece or (according to the embodiment referred to, at least implicitly, below) as a coupling of the kind effected, for example, by means of surfaces 5 which diverge in a general V-shape for coupling with a complementary aperture in the carrier 3.

This latter is usually formed from a material identical or at least similar to that of the grip 2, this choice being particularly advantageous whenever an integral connection is required.

The carrier 3 may be formed as a single piece (for example, if it is to be fitted at the time of manufacture when the carrier 3, and possibly the grip 2 also, may in fact be formed on the body of the belt B) or, in the currently preferred embodiment, it may be formed from two complementary half-shells which can be opened for mounting on the belt B, and then locked on to the belt B itself.

Preferably, the two complementary parts (indicated 3a and 3b) constituting the carrier 3 are provided with rapid coupling members of the snap and/or catch type (for example, of the type having a complementary pin and hole to enable mounting in the coupled position). These elements are not immediately visible in the drawings. Alternatively, according to an arrangement which, for reasons of clarity is indicated in Figure 2 only, the use of screws 6 or similar attachment elements can be envisaged.

Reference numeral 7 indicates the opening in the carrier 3 intended to receive the end of the grip 2 (where, in the example illustrated, the grip 2 has the two V-shape divergent surfaces). As has already been said, however, the means by which the grip 2 is connected to the carrier 3 may be different.

In the embodiment shown in Figures 1 and 2, the carrier 3 is in the form of a collar having, at least along one of its edges, a central notch 8 (preferably present on both edges of the collar) which enables the centering of the carrier 3 itself on the button element H usually provided on the belt B for holding the tongue L and preventing it from accidentally slipping down.

More preferably, the notch or notches 8 are provided on both edges of the carrier 3 so that the position of the accessory 1 on the belt B does not vary. Naturally, in referring to the presence of the notches 8 it is assumed that the carrier 3 is formed in such a way that the accessory 1 is freely slidable with respect to the belt B. This may be preferable, but it is not essential. As has already been said several times, the accessory 1 may constitute an integral part of the belt B such that it cannot be removed and/or it is located in a fixed position with respect thereto. The use of either arrangement is clearly referred to in the specific embodiments.

In a possible embodiment of the arrangement shown in Figures 1 and 2, the coupling of the grip 2 with the carrier 3 may be by way of hinge means or a joint (not explicitly shown in the drawings, but of any known type) in such a way as to enable the orientation of the grip 2 with respect to the carrier 3 fitted on the belt B.

Orientation may be horizontal (that is, about an approximately vertical pivot axis) so as to enable, for example, the grip 2 to project into the passenger compartment. This arrangement may be advantageous, for example, in motor vehicles in which the side pillars of the passenger compartment are spaced from the seats.

In addition, or as an alternative to the aforesaid horizontal orientation, a vertical oscillation may be envisaged (that is, about an approximately horizontal pivot axis - see the arrow y in Figure 1), to enable the grip 2 to be more easily orientated in the gripping position.

In any case, the capacity to orientate (horizontally and/or vertically) the carrier 3 with respect to the grip, due to the presence of the aforesaid hinge or joint means, enables the carrier 3 to "follow" the belt B in the orientation movement to which it is subjected while being extended over the body of the person in the seat, while avoiding the possibility of it jamming.

In the embodiment shown in Figures 3 and 4, the carrier 3 preferably retains a general tubular or sleeve-like structure, which enables it to be fitted to the tongue L. Preferably, the carrier 3 surrounds most of the body of the tongue L, leaving the coupling part L1 of the tongue itself to project towards the outside.

For this reason, in the embodiment shown in Figures 3 and 4, the carrier 3 is essentially constituted from a shaped body (in this case too it can be constituted from a single piece or from several complementary pieces connected to each other and to the grip 2 according to the criteria described above with reference to the embodiment shown in Figures 1 and 3) which is able to surround the body of the tongue 3. A hole 9 is naturally envisaged in the aforesaid shaped body for the coupling part L1 of the tongue to pass through.

Naturally, the principle of the invention remaining the same, the details of construction and the embodiments may be widely varied with respect to that described and illustrated, without by this departing from the ambit of the present invention.

## Claims

1. An accessory for grasping a safety belt (B) which, when not in use, lie to the side and rear of a seat (S) of a motor vehicle, characterised in that it includes a generally elongate gripper body (2) which can be associated with a safety belt (B) so as to project, in use, from the said belt (B) towards the said seat (S) to make it easier for the person in the seat (S) to grasp the belt (B).

2. An accessory according to Claim 1, characterised in that it includes a grip (2) defining the said gripper body, and an attachment member (3) for mounting it in an associated relationship with the said belt (B).

3. An accessory according to Claim 2, characterised in that the said attachment member (3) is formed from a body which can be fitted to the said belt (B).

4. An accessory according to Claim 2, characterised in that the said attachment member (3) is formed from a shaped body mountable on the aforesaid tongue (L) used for fastening the belt (B) in the closed use position.

5. An accessory according to any preceding claim, characterised in that the said gripper body (2) is between approximately 3 cm and 30 cm in length.

6. An accessory according to any preceding claim, characterised in that at least the said gripper body (2) is formed from a plastics/rubbery material.

7. An accessory according to any preceding claim, characterised in that it is formed as a single piece.

8. An accessory according to Claim 2, characterised in that it is formed from at least two pieces defining, respectively, the said grip (2) and the said attachment member (3).

9. An accessory according to any preceding claim, characterised in that at least the said grip (2) has a smooth surface.

10. An accessory according to any of Claims 1 to 8, characterised in that at least the said grip (2) has an irregular surface.

11. An accessory according to any preceding claim, characterised in that it has at least a preferential shearing region (4) along the said grip (2) so to enable the selective shortening of the grip (2) itself.

12. An accessory according to any preceding claims, characterised in that the said grip (2) is such that, in use, it extends in a generally inclined direction with respect to the said belt.

13. An accessory according to Claim 12, characterised in that the said inclination is defined by an angle of inclination of up to approximately 45°.

14. An accessory according to any preceding claim, characterised in that the said grip (2) is formed from several elements coupled together.

15. An accessory according to any of Claims 1 to 13, characterised in that the said elongate body has a general telescopic structure.

16. An accessory according to Claim 2, characterised in that the said attachment member (3) is formed from several complementary parts (3a, 3b) which can be coupled together by means of rapid coupling elements.

17. An accessory according to Claim 2, characterised in that the said attachment member (3) is formed from several complementary parts (3a, 3b) which can be coupled together by means of fixing elements such as screws (6).

18. An accessory according to Claim 2, characterised in that the said attachment member (3) has a collar-like shape provided, at least along its end intended in use to face downwards, with at least one centering notch (8) for a button member (H) on the belt (B).

19. An accessory according to Claim 18, characterised in that the said attachment member (3) has two opposite notch formations (8) at the said ends.

20. An accessory according to Claim 18 or Claim 19, characterised in that the said attachment member (3) has at least one notch formation (8) on both its edges.

21. An accessory according to Claim 4, characterised in that the said attachment member (3) comprises a shaped body which can surround the body of the said tongue (L), and having at least one opening (9) for the attachment member (L1) of the said tongue to pass through.

22. An accessory according to Claim 2, characterised in that hinge or joint means are located between the said grip (2) and the said attachment member (3).

23. An accessory according to Claim 22, characterised in that the said hinge or joint means enable the horizontal orientation of the said grip (2) with respect to the attachment member (3).

24. An accessory according to Claim 22 or Claim 23, characterised in that the said hinge or joint means enable the vertical orientation of the said grip (2) with respect to the said attachment member (3).
